# EUROPÄISCHE PATENTSCHRIFT

(11) **EP 2 857 654 B1**
(45) Veröffentlichungstag und Bekanntmachung des Hinweises auf die Patenterteilung: **21.10.2015**
(21) Anmeldenummer: 14001531.4
(22) Anmeldetag: 16.07.2013
(51) Int. Cl.: F02B 61/04, B63H 20/00, F01B 1/10, F02B 75/00, F02B 75/06, F01N 11/00, F02B 1/12

(54) **Außenbordmotor für ein Wasserfahrzeug**
Outboard motor for a watercraft
Moteur hors-bord pour bateau

(30) Priorität: 10.08.2012 DE 102012015907
(43) Veröffentlichungstag der Anmeldung: 08.04.2015
(62) Teilanmeldung aus: 13003564.5
(73) Patentinhaber: Neander Motors AG, 24143 Kiel (DE)
(72) Erfinder: Wittwer, Ulrich, 30890 Barsinghausen (DE)

(56) Entgegenhaltungen:
- WO-A1-2005/038197
- DE-A1- 3 000 531
- GB-A- 2 450 331
- JP-A- H01 306 390
- US-A- 5 857 336

## Beschreibung

Die Erfindung bezieht sich auf einen Außenbordmotor für ein Wasserfahrzeug, umfassend zumindest einen Hubkolben, nach dem Oberbegriff des Patentanspruchs 1.

Es ist eine Hubkolbenmaschine bekannt, DE 33 22 140 A1, die über ein Motorgehäuse mit einem Zylinderkopf und einem Zylindergehäuse verfügt. Das Zylindergehäuse weist eine Zylinderbohrung auf, in der ein Hubkolben hin und her bewegbar ist. Mit dem Hubkolben über Kolbenbolzen verbunden sind zwei Pleuel, die auf einer von den Kolbenbolzen abgekehrten Seite mit zwei in einem Kurbelwellenraum angeordneten Kurbelwellen zusammenwirken. Die Kurbelwellen sind über zwei in Eingriff miteinander stehende Zahnräder gekoppelt, dergestalt, dass die Kurbelwellen mit gleicher Drehzahl, jedoch gegensinnig gedreht werden. Im Zylinderkopf sind Ein- und Auslassventile vorgesehen, die mittels oben liegenden Nockenwellen und unter Zwischenschaltung von Tassenstößeln betätigt werden. Diese Hubkolbenmaschine ist als Ottomotor zum Antrieb von Personenkraftwagen geeignet, wobei ihre Kurbelwellen horizontal bzw. liegend ausgerichtet sind.

Aus der DE 10 2005 056 508 A1 geht ein V-Motor mit mindestens einem Turbolader hervor. Der V-Motor ist als Dieselmotor der Gattung Außenbordmotor für Wasserfahrzeuge ausgebildet. Eine mit Kolben des Motors verbunden Kurbelwelle verläuft aufrecht, und der Turbolader ist an einer einer Wasserlinie zugekehrten Unterseite einer einen Zylinderkopf und ein Zylindergehäuse aufweisenden Baueinheit angeordnet. In einem durch die V-förmigen Zylinder gebildeten Raum erstreckt sich eine Abgasanlage, an die der Abgasturbolader angeschlossen ist. Mit der Kurbelwelle steht eine Antriebswelle für eine Schiffschraube in Wirkverbindung.

Es ist Aufgabe der Erfindung eine Hubkolbenbrennkraftmaschine mit wenigstens einem mit zwei Pleueln zusammenwirkenden Hubkolben, die mit zwei Kurbelwellen zusammenwirken, zu entwickeln, welche Hubkolbenbrennkraftmaschine als hochwirksamer Außenbordmotor zum Antrieb eines Wasserfahrzeugs ausgebildet ist und im Dieselverfahren mit Abgasturboladung arbeitet. Dabei sollten aber auch die Abgasturboladung und mit letzterer in Wirkverbindung stehende Komponenten und Systeme der Hubkolbenbrennkraftmaschine funktionsgerecht und bauraumgünstig konzipiert an der Hubkolbenbrennkraftmaschine angeordnet sein.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass die mindestens einen Hubkolben mit zwei Pleueln und zwei Kurbelwellen umfassende Brennkraftmaschine über ausgezeichnete Funktionseigenschaften verfügt, die dadurch optimiert werden, dass sie nach dem Dieselverfahren und mit Abgasturboladung arbeitet. Mit dieser technischen Ausprägung ist die Hubkolbenbrennkraftmaschine als Außenbordmotor vorzüglich geeignet. Vorbildlich angeordnet ist die Abgasturboladung bzw. die Abgasturboladereinrichtung mit ihrer das Turbinenrad und das Verdichterrad tragenden Welle, die quer zur Längsrichtung des Wasserfahrzeugs verläuft. Dadurch sind Lagerbelastungen auf die Welle aufgrund von Kippbewegungen des Wasserfahrzeugs in seiner Längsrichtung weitgehend unkritisch. Musterhaft ist dabei auch wie die Abgasturboladereinrichtung an der oberen Stirnwand der Baueinheit -Zylinderkopf und Zylindergehäuse-, d.h. entfernt von der Wasserlinie des Wasserfahrzeugs angebracht ist, wodurch verhindert wird dass bei natürlicher Fahrt des Wasserfahrzeugs Betriebsstörungen verursachendes Wasser in die Abgasturboladereinrichtung eindringt. Unterstützt wird dies dadurch, dass zwischen Abgaseintrittsseite der Abgasturbine und dem ersten Stirnwandabschnitt des Zylinderkopfs das erste winkelförmige Rohrstück und zwischen Abgasaustrittsseite der Abgasturbine und einem zweiten Stirnwand des Zylindergehäuses das zweite winkelförmige Rohrstück vorgesehen ist. Hervorzuheben ist darüber hinaus, dass zumindest eines der beiden Rohrstücke eine formsteife Verbindung zwischen der Baueinheit und der Abgasturbine bildet. Beispiel gebend ist, dass der Zylinderkopf an der Auslassseite den ersten aufrechten Abgaskanal aufweist, über den Abgase nach oben hin in die Abgasturbine geführt werden und dort das Turbinenrad beaufschlagen. Eine ausgezeichnete Lösung für die Brennkraftmaschine ist, dass der erste Abgaskanal im Zylinderkopf mit der sich über die wesentliche Höhe des Zylinderkopfs erstreckenden Verkleidung versehen ist, die als Kühlmantel für die Abgase ausgebildet ist. Dieser Kühlmantel ist technisch hochrangig ausgeführt, weil er einen inneren Kühlkanal und einen äußeren Kühlkanal aufweist, wobei der innere Kühlkanal von Motoröl und der äußere Kühlkanal von Kühlwasser durchströmt wird, und es sind der innere Kühlkanal an den Motorschmierölkreislauf und der äußere Kühlkanal an den Kühlwasserkreislauf der Hubkolbenbrennkraftmaschine angeschlossen. Dieses ausgeklügelte Kühlmantelsystem stellt sicher, dass wenn der Außenbordmotor über eine Längere Zeiteinheit im Leerlauf betrieben wird -Fischen, Beobachtungseinsätze oder dgl.-, den Folgen einer Taupunktunerschreitung entgegengewirkt ist. Es wird also im Wesentlichen verhindert, dass dem im Bereich des ersten Abgaskanals vorhandenen Abgas sich ein Kondensat bildet, das sich mit Abgasbestandteilen z.B. zu sauren Medien verbindet, die die Metalloberfläche eines dem Abgaskanal benachbarten Zylindergebiets dauerhaft schädigen können. Besagte Taupunktunterschreitung wird dadurch vermieden, dass im Leerlauf des Außenbordmotors das Abgas durch das zirkulierende Medium im Motorschmierölkreislauf definiert auf einer angemessenen Temperatur gehalten wird, wobei der Kühlwasserdurchfluss im Bereich des Kühlmantels bzw. äußeren Kühlkanals thermostatisch unterbrochen wird. Maßstäbe setzt außerdem das zweite Rohrstück, das zumindest bereichsweise mit einem Kühlkanal versehen ist der an den Kühlwasserkreislauf der Hubkolbenbrennkraftmaschine angeschlossen ist; sinngemäß ist eine vergleichbare Maßnahme an der Abgasturbine der Abgasturboladereinrichtung verwirklicht. Darüber hinaus ist vorteilhaft gelöst, dass dem Verdichter Ansaugluft über den aufrechten an die Baueinheit angepassten Luftbehälter zugeführt wird. Ergänzt wird der Luftbehälter dadurch, dass in ihn ein Ansaugluftschalldämpfer integriert ist. Konstruktiv günstig ausgeführt ist, dass das den Verdichter verlassende Medium in den Zwischenkühler gelangt und von dort in den dem Zylinderkopf vorgeschalteten Saugbehälter der Sauganlage geführt wird. Dabei sind zwischen Verdichter und Zwischenkühler ein erstes flexibles Verbindungsstück und zwischen dem an den Kühlwasserkreislauf angeschlossenen Zwischenkühler und dem Saugbehälter ein zweites Verbindungsstück vorgesehen. Schließlich schaffen die Anordnung der Schwungräder der Kurbelwellen, die Abgasturboladereinrichtung und der Zwischenkühler an der oberen Stirnwand der Baueinheit kompakte bauliche Gegebenheiten.

In der Zeichnung ist ein Ausführungsbeispiel der Erfindung dargestellt, das nachstehend näher erläutert wird.

Es zeigen
Fig. 1 eine Prinzipdarstellung einer Hubkolbenbrennkraftmaschine, die zusammen mit einem Getriebeaggregat einen Außenbordmotor zum Antrieb eines Wasserfahrzeugs bildet,
Fig. 2 eine erste Schrägansicht der Hubkolbenbrennkraftmaschine mit zwei Pleueln je Hubkolben und zwei Kurbelwellen,
Fig. 3 eine zweite Schrägansicht der Hubkolbenbrennkraftmaschine mit Abgasturboladereinrichtung, Zylinderkopf, Zylindergehäuse und einem ersten und einem zweite zweitem Abgaskanal,

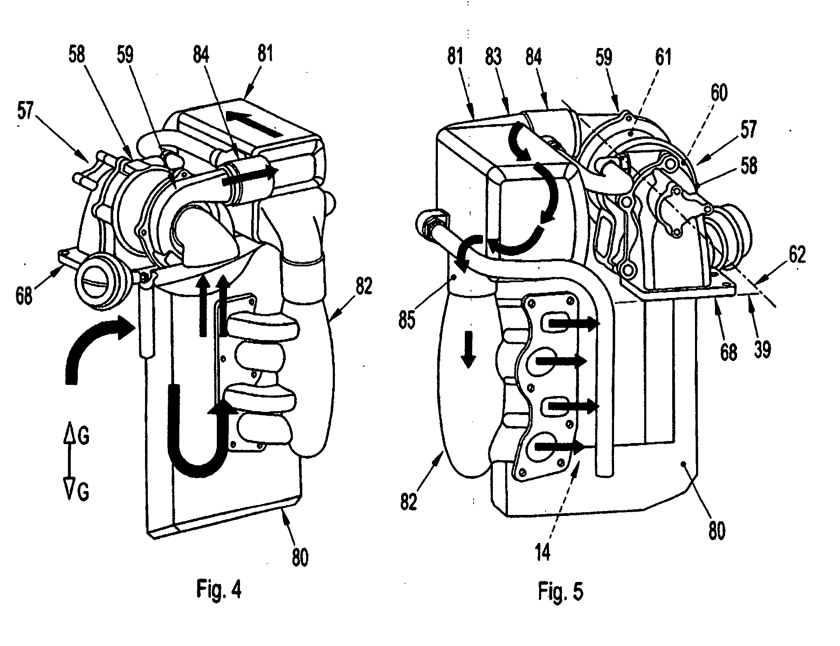

Fig. 4 eine dritte Schrägansicht der Hubkolbenbrennkraftmaschine mit Luftbehälter, Turboladereinrichtung und Zwischenkühler,
Fig. 5 eine vierte Schrägansicht der Hubkolbenbrennkraftmaschine mit Turboladereinrichtung, Zwischenkühler und Saugbehälter,
Fig. 6 einen Längsschnitt durch einen ersten aufrechten Abgaskanal,
Fig. 7 einen Längsschnitt durch einen zweiten Abgaskanal,
Fig. 8 einen Schnitt nach der Linie VIII-VIII der Fig. 6 in größerem Maßstab,
Fig. 9 eine Schrägansicht von hinten links auf die als Außenbordmotor dargestellte Hubkolbenbrennkraftmaschine mit an einer oberen Stirnseite einer aus Zylinderkopf und Zylindergehäuse bestehenden Baueinheit mit Schwungrädern, Abgasturboladereinrichtung und Zwischenkühler.

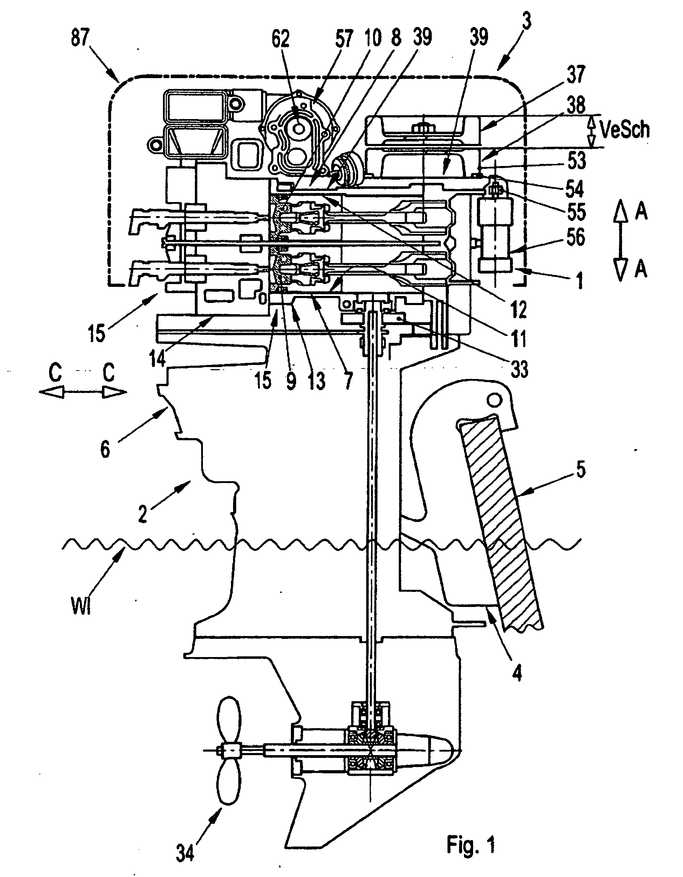

In Fig. 1 ist eine Hubkolbenbrennkraftmaschine 1 abgebildet, die mit einer Getriebeeinheit 2 verbaut ist und einen Außenbordmotor 3 zur Fortbewegung eines nicht dargestellten Wasserfahrzeugs bildet -CH 168 912 und DE 600 15 262 T2-. Zur Befestigung des Außenbordmotors 3 am Wasserfahrzeug dient eine Halteeinrichtung 4, die eine aufrechte, wangenartige Heckquerwand 5 des nicht näher dargestellten Wasserfahrzeugs umgreift und an einem Gehäuse 6 der Getriebeeinheit 2 festgelegt ist.

Die Hubkolbenbrennkraftmaschine 1 umfasst in Reihe angeordnete Zylinder 7 und 8 mit ersten und zweiten Hubkolben 9 und 10, die in Zylinderbohrungen 11 und 12 hin und her bewegt werden. Die Zylinderbohrungen 11 und 12 sind in ein Zylindergehäuse 13 eingearbeitet, das mit einem Zylinderkopf 14 eine Baueinheit 15 bildet. Als Werkstoff für das Zylindergehäuse 13 und den Zylinderkopf 14 wird eine Leichtmetalllegierung eingesetzt. Jeder Hubkolben bspw. 9 wirkt über ein erstes Pleuel 16 und ein zweites Pleuel 17 mit einer ersten Kurbelwelle 18 und einer zweiten Kurbelwelle 19 zusammen. Beide mit Gegengewichten 20 und 21 versehene Kurbelwellen 18 und 19 verlaufen mit parallelem Abstand Ast zueinander, rotieren um zwei aufrecht bzw. vertikal in dem Außenbordmotor 3 stehende Kurbelwellenachsen 22 und 23 der Kurbelwellen 18 und 19, und sie sind mit ersten und zweiten Synchronisationszahnrädern 24 und 25 ausgestattet. Die Synchronisationszahnräder 24 und 25 stehen über ein Stirnradgetriebe 26 in der Weise direkt in Wirkverbindung, dass sich die Kurbelwellen 18 und 19 gegenläufig und synchron drehen.

Besagte Hubkolbenbrennkraftmaschine 1 arbeitet im Dieselverfahren mit Direkteinspritzung und ihr Betrieb wird durch Abgasturboladung optimiert. In dem mit dem Zylindergehäuse 13 verbundenen Zylinderkopf 14 sind zwei Einlassventile 27 und 28 und zwei Auslassventile 29 und 30 je Hubkolben 8 vorgesehen, mit denen der Gaswechsel der Brennkraftmaschine 1 gesteuert wird. Die Einlassventile 27 und 28 werden mittels einer Einlassnockenwelle 31 beeinflusst; die Auslassventile 29 und 30 mittels einer Auslassnockenwelle 32.

Im Ausführungsbeispiel wirkt die erste Kurbelwelle 18 mittels eines Getriebes 33 auf eine Antriebsschraube 34 des Wasserfahrzeugs ein. Und erste obere Endbereiche 35 und 36 der Kurbelwellen 18 und 19 sind mit Schwungrädern 37 und 38 versehen, die außerhalb einer oberen Stirnwand 39 der Baueinheit 15 -Zylinderkopf 14 und Zylindergehäuses 13 platziert sind. An von den oberen Endbereichen 35 und 36 der Kurbelwellen 18 und 19 abgekehrten unteren Endbereichen 40 und 41 ist am ersten unteren Endbereich 40 der ersten Kurbelwelle 18 eine Antriebsvorrichtung 42 für einen Ventiltrieb 43 angebracht, mit dem die Einlassnockenwelle 31 und die Auslassnockenwelle 32 bzw. die Einlassventile 27 und 28 und die Auslassventile 29 und 30 betätigt werden.

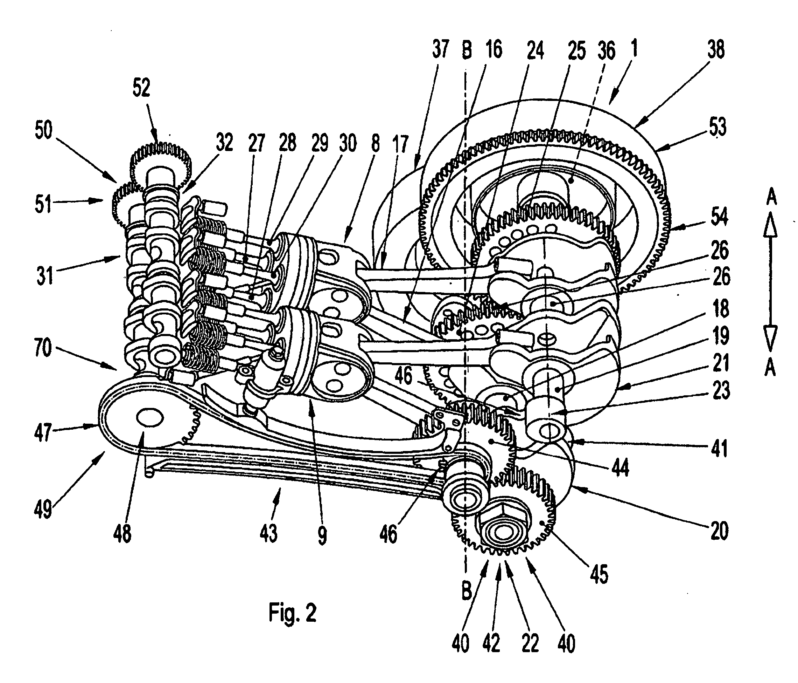

Die Schwungräder 37 und 38 an den ersten oberen Endbereichen 35 und 36 der beiden Kurbelwellen 18 und 19 verlaufen in axialer Richtung A-A betrachtet mit einem Versatz VeSch zueinander -Fig. 1-, der eine abschnittsweise Überlappung der beiden Schwungräder 37 und 38 ermöglicht. Der Versatz VeSch der Schwungräder 37 und 38 ist, um räumlich günstige Voraussetzungen -auch für den parallelen Abstand zwischen den Kurbelwellen 18 und 19 zu schaffen-, relativ klein-Fig.1 und 2-

Nach Fig. 2 liegen die Schwungräder 37 und 38 benachbart der Synchronisationszahnräder 24 und 25, die in einer sich quer zu einer sich Längsmitteleben B-B der Brennkraftmaschine 1 sich erstreckenden Verbindungsebene verlaufen. Beide Kurbelwellen 1 und 19 sind symmetrisch zu der Längsmittelebene B-B angeordnet, die eine Drehachse eines Zwischenzahnrads 44 einschließt. Das Zwischenzahnrad 44 wird von einem Antriebszahnrad 45 beeinflusst, das an dem unteren Endbereich 40 der ersten Kurbelwelle 18 befestigt ist. Das Zwischenzahnrad 44 ist mit einem koaxialen ersten Triebrad 46 für einen Umschlingungstrieb 47 versehen ist, der mit einem zweiten Triebrad 48, verbunden mit der Einlassnockenwelle 31, an einem ersten unteren Ende 49, zusammenwirkt. An einem zweiten oberen Ende 50 der Einlassnockenwelle 31 ist diese mit einem ersten Stirnrad 51 versehen, das mit einem zweiten Stirnrad 52 der Auslassnockenwelle 32 kämmt. Die Schwungräder 37 und 38 sind im Wesentlichen baugleich ausgeführt, wobei im Ausführungsbeispiel an einem Außenumfang 53 des zweiten Schwungrads 38 ein Antriebskranz 54 aufgebracht ist, der z.B. mit einem Ritzel 55 eines Anlassers 56 in Wirkverbindung steht -Fig. 1 und 2-.

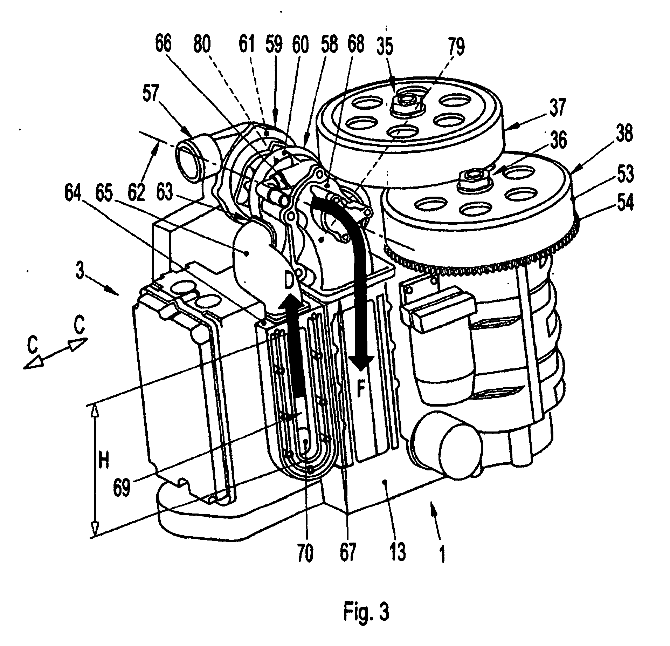

Die Abgasturboladung umfasst eine Abgasturboladereinrichtung 57 mit einer Abgasturbine 58 und einem Verdichter 59 bzw. einer ein Turbinenrad 60 und ein Verdichterrad 61 tragenden Welle 62, die quer zur Längsrichtung C-C des Wasserfahrzeugs ausgerichtet ist. An der oberen Stirnwand 39 der aus Zylinderkurbelgehäuse 13 und Zylinderkopf 14 bestehenden Baueinheit 15 ist die Abgasturboladereinrichtung 57 befestigt d.h. mit einem deutlichen Abstand zu einer Wasserlinie WI -Fig. 1-, in die das Wasserfahrzeug eintaucht. Zwischen einer Abgaseintrittseite 63 der Abgasturbine 58 und einem ersten Stirnwandabschnitt 64 des Zylinderkopfs 14 ist ein erstes winkelförmiges Rohrstück 65 vorgesehen; zwischen einer Abgasaustrittsseite 66 der Abgasturbine 58 und einem zweiten Stirnwandabschnitt 67 ist ein zweites winkelförmiges Rohrstück 68 -Fig. 3-. Beide Rohrstücke 65 und 68 sind aus formsteifem eisenmetallischem Werkstoff hergestellt und starr mit dem Zylindergehäuse 13 und dem Zylinderkopf 14 verbinden. Denkbar ist aber auch nur das zweite mit der Abgasaustrittseite 63 verbundene zweite Rohrstück 68 als starre Verbindung zwischen Abgasturbine 58 und zweitem Stirnwandabschnitt 67 auszuführen und das erste Rohrstück 65 definiert elastisch auszugestalten.

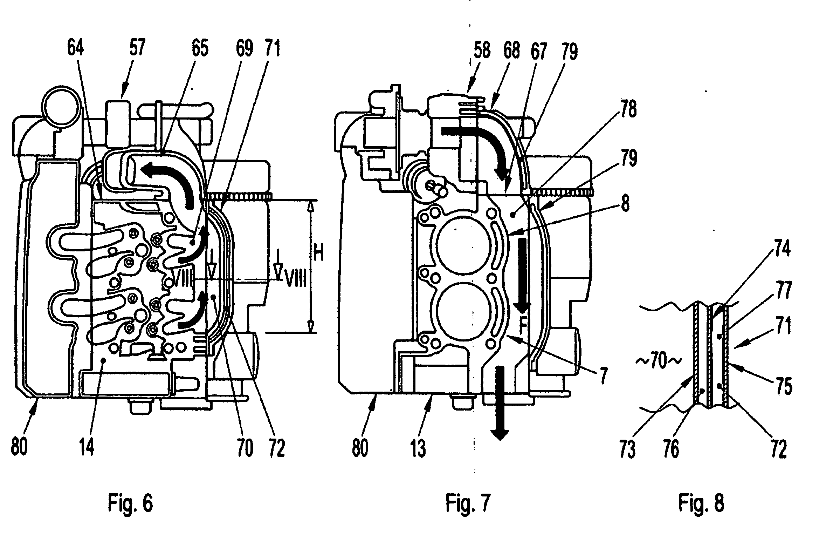

Der Zylinderkopf 14 -Fig. 3 und 6- ist an einem Auslassbereich 69 mit einen ersten aufrechten Abgaskanal 70 versehen, über den Abgase, die aus dem Zylinderkopf 14 austreten, nach oben hin in Richtung D in die Abgasturbine 58 der Abgasturboladereinrichtung 57 geführt werden und dort das Turbinenrad 60 beaufschlagen. Der erste Abgaskanal 64 im Zylinderkopf 14 ist mit einer sich über eine wesentliche Höhe H des Zylinderkopfs 14 -Fig. 3 und 6- erstreckende Verkleidung 71 versehen. Diese z.B. aus eisenmetallischem Werkstoff z.B. Dünnblech aus hochfestem Stahl hergestellte Verkleidung 71 ist als Kühlmantel 72 für die den Abgaskanal 70 durchströmenden Abgase ausgebildet -Fig. 6 und 8-. Der Kühlmantel 72, umfassend eine innere Wand 73, eine mittlere Wand 74 und eine äußere Wand 75, verfügt über einen inneren Kühlkanal 76 und einen äußeren Kühlkanal 77, wobei der innere Kühlkanal 70 von Motoröl und der äußere Kühlkanal 71 von Kühlwasser durchströmt wird. Dazu sind der innere Kühlkanal 76 an den Motorschmierölkreislauf und der äußere Kühlkanal 77 an den Kühlwasserkreislauf der Hubkolbenbrennkraftmaschine 1 angeschlossen.

Die Abgase, die die Abgasturbine 58 verlassen, werden durch einen zweiten Abgaskanal 78 im Zylindergehäuse 13 geführt, und zwar nach unten hin -in Richtung F- vorbei an den Zylindern 7 und 8 in ein Abgassystem der Hubkolbenbrennkraftmaschine 1, und sie treten im Bereich der Antriebsschraube 34 aus dem Abgassystem aus. Der etwa mit parallelem Abstand zum ersten Abgaskanal 72 verlaufende zweite Abgaskanal 78 im Zylindergehäuse 13 wird ebenfalls von einer Verkleidung 79 bspw. aus Metallblech mit geeigneten Spezifikationen abgedeckt -Fig. 7-.

Das zweite Rohrstück 68 -Fig. 7- ist zumindest bereichsweise mit einem Kühlmantelabschnitt 79 versehen, der von Kühlmittel des Kühlwasserkreislaufs der Hubkolbenbrennkraftmaschine 1 durchströmt wird. Ein vergleichbarer Kühlmantelabschnitt 79 ist in die Abgasturbine 58 integriert.

Dem Verdichter 59 der Abgasturboladereinrichtung 57 wird Ansaugluft über einen aufrechten -in Höhenrichtung G-G der Hubkolbenbrennkraftmaschine 1 betrachteteng an die Baueinheit 15 angepassten Luftbehälter 80 mit bspw. viereckigem Querschnitt zugeführt. In den Luftbehälter 80 integriert ist ein nicht näher dargestellter Ansaugluftschalldämpfer. Das den Verdichter 59 verlassende Medium gelangt in einen von dem Kühlwasser des Kühlwasserkreislaufs durchströmten Zwischenkühler 81, von wo aus es in einen Saugbehälter 82 einer Sauganlage gelangt. Der Saugbehälter 82 mit etwa ovaler oder Ei-artiger Form ist dem Zylinderkopf 14 vorgeschaltet. Zwischen dem Verdichter 59 und einem Gehäuse 83 des Zwischenkühlers 81 ist ein erstes flexibles Zwischenstück 84 vorgesehen; zwischen Zwischenkühler 81 und Saugbehälter 82 ein zweites flexibles Verbindungsstück 85. Beide Verbindungsstücke 84 und 85 können aus plastisch verformbarem Werkstoff bestehen weisen einen rohrförmigen Querschnitt auf.

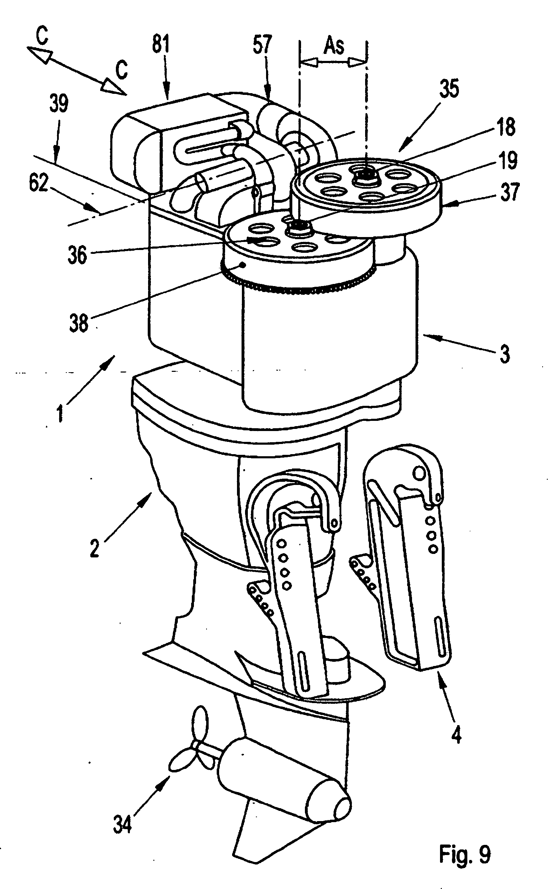

Schließlich sind an der oberen Stirnwand 39 der Baueinheit 15 die Schwungräder 37 und 38 der Kurbelwellen 18 und 19, die Abgasturboladereinrichtung 57 und der Zwischenkühler 81 zu einer kompakten Komponenteneinheit 81 -Fig. 9-, die von einer beweglichen Haube 87 -Fig. 1- abgedeckt wird. Dabei erstreckt sich die Abgasturboladereinrichtung 57 zwischen den Schwungrädern 37 und 38 und dem Zwischenkühler 81.

## Patentansprüche

1. Außenbordmotor (3) für ein Wasserfahrzeug, umfassend zumindest einen Hubkolben (9, 10), der in einer Zylinderbohrung (11, 12) eines mit einem Zylinderkopf (14) eine Baueinheit (15) bildenden Zylindergehäuses hin und her bewegt wird und unter Zwischenschaltung von zwei Pleueln (16, 17) mit ersten und zweiten Kurbelwellen (18, 19) zusammenwirkt, welche Kurbelwellen (18, 19) um zwei Kurbelwellenachsen (22, 23) rotieren und mit zwei mit den Kurbelwellen (18, 19) drehfest verbundenen Synchronisationszahnrädern (24, 25) eines Stirnradgetriebes (26) in der Weise in Wirkverbindung stehen, dass sich die Kurbelwellen (18, 19) synchron gegenläufig drehen, wobei der Außenbordmotor (3) bspw. nach dem Dieselverfahren und mit Abgasturboladung arbeitet, welche erste und die zweite Kurbelwellen (18, 19) aufrecht stehen, dergestalt, dass eine der beiden Kurbelwellen (18 oder 19) mittels eines Getriebes (33) auf eine Antriebsschraube (34) des Wasserfahrzeugs einwirkt, **dadurch gekennzeichnet, dass** die Abgasturboladung eine Abgasturboladereinrichtung (57) mit Abgasturbine (58) und Verdichter (59) bzw. eine ein Turbinenrad (60) und ein Verdichterrad (61) tragende Welle (62) aufweist und dass die Abgasturboladereinrichtung (57) direkt oder indirekt an einer oberen Stirnwand (39) der aus Zylinderkopf (14) und Zylindergehäuse (13) bestehenden Baueinheit (15) befestigt ist, wobei zwischen Abgaseintrittsseite (63) der Abgasturbine (58) und einem ersten oberen Stirnwandabschnitt (64) des Zylinderkopfs (14) ein erstes winkelförmiges Rohrstück (65) vorgesehen ist und dass darüber hinaus der Zylinderkopf (14) an einem Auslassbereich (69) einen ersten aufrechten Abgaskanal (70) besitzt, über den die Abgase nach oben hin (Richtung D) in die Abgasturbine (58) geführt werden und dort das Turbinenrad (60) beaufschlagen.

2. Außenbordmotor nach den Anspruch 1, **dadurch gekennzeichnet, dass** zwischen Abgasaustrittseite (66) der Abgasturbine (58) und einem zweiten oberen Stirnwandabschnitt (67) des Zylindergehäuses (13) ein zweites winkelförmiges Rohrstück (68) vorgesehen ist.

3. Außenbordmotor nach Ansprüchen 1 und 2, **dadurch gekennzeichnet, dass** zumindest eines der beiden Rohrstücke (65; 68) eine formsteife Verbindung zwischen Baueinheit (15) und Abgasturbine (58) bildet.

4. Außenbordmotor nach den Anspruch 1, **dadurch gekennzeichnet, dass** der erste Abgaskanal (70) im Zylinderkopf (14) mit einer sich über die wesentliche Höhe (H) des besagten Zylinderkopfes (14) erstreckende Verkleidung (71) versehen ist, die als Kühlmantel (72) für die Abgase ausgebildet ist.

5. Außenbormotor nach Anspruch 4, **dadurch gekennzeichnet, dass** der Kühlmantel (72) einen inneren Kühlkanal (76) und einen äußeren Kühlkanal (77) aufweist, wobei der innere Kühlkanal (76) von Motoröl und der äußere Kühlkanal (76) von Kühlwasser durchströmt wird.

6. Außenbordmotor nach Anspruch 5, **dadurch gekennzeichnet, dass** der innere Kühlkanal (76) an den Motorschmierölkreislauf und der äußere Kühlkanal (77) an den Kühlwasserkreislauf des Außenbordmotors (3) angeschlossen sind.

7. Außenbormotor nach einem oder mehreren der vorangehenden Ansprüche, **dadurch gekennzeichnet, dass** die die Abgasturbine (58) verlassenden Abgase nach unten hin (Richtung E) in einen zweiten Abgaskanal (78) im Zylindergehäuse (13) geführt werden.

8. Außenbordmotor nach einem oder mehreren der vorangehenden Ansprüche, **dadurch gekennzeichnet, dass** das zweite Rohrstück (68) einen Kühlmantelabschnitt (79) aufweist, der an den Kühlwasserkreislauf der Außenbordmotors (3) angeschlossen ist.

9. Außenbordmotor nach einem oder mehreren der vorangehenden Ansprüche, **dadurch gekennzeichnet, dass** die Abgasturbine (58) zumindest bereichsweise von Kühlwasser des Kühlwasserkreislaufs des Außenbordmotors (1) durchströmt wird.

10. Außenbordmotor nach Anspruch 1, **dadurch gekennzeichnet, dass** dem Verdichter (59) Ansaugluft über einen aufrechten an die Baueinheit (15) angegliederten Luftbehälter (80) zugeführt wird.

11. Außenbordmotor nach den Anspruch 10, **dadurch gekennzeichnet, dass** der Luftbehälter (80) mit einem Ansaugluftschalldämpfer versehen ist.

12. Außenbordmotor nach den Ansprüchen 1 und 10, **dadurch gekennzeichnet, dass** das den Verdichter (59) verlassende Medium in einen Zwischenkühler (81) gelangt und von dort in einen dem Zylinderkopf (14) vorgeschalteten Saugbehälter (82) einer Sauganlage geführt wird.

13. Außenbordmotor nach Anspruch 12, **dadurch gekennzeichnet, dass** zwischen Verdichter (59) und Zwischenkühler (81) ein erstes flexibles Verbindungsstück (84) und zwischen Zwischenkühler (81) und Saugbehälter (82) ein zweites flexibles Verbindungsstück (85) vorgesehen sind.

14. Außenbordmotor nach Anspruch 12, **dadurch gekennzeichnet, dass** der Zwischenkühler (81) an den Kühlwasserkreislauf des Außenbordmotors (1) angeschlossen ist.

15. Hubkolbenbrennkraftmaschine nach einem oder mehreren der vorangehenden Ansprüche 12 - 14, **dadurch gekennzeichnet, dass** oberhalb der der oberen Stirnwand (39) der Baueinheit (15) Schwungräder (37 und 38) der Kurbelwellen (18 und 19), die Abgasturboladereinrichtung (57) und der Zwischenkühler (81) kompakt zueinander angeordnet sind.

## Claims

1. Outboard engine (3) for a watercraft, comprising at least one piston (9, 10) moved back and forth in a cylinder bore (11, 12) of a cylinder housing (13) which together with a cylinder head (14) forms an assembly unit (15) und which piston interacts with first and second crankshafts (18, 19) by interconnecting two connecting rods (16, 17), which crankshafts (18, 19) rotate about two crankshaft axes (22, 23) and are effectively connected with two synchronization spur gears (24, 25) of a spur gearing (26) that are co-rotationally connected to the crankshafts (18, 19) such that the crankshafts (18, 19) are rotated synchronically in opposite directions, wherein the Diesel outboard engine (3) works with exhaust gas turbo charging, which first and second crankshafts (18, 19) are disposed upright such that one of the two crankshafts (18 or 19) acts on a drive propeller (34) o the watercraft via a transmission (33), **characterized in that** the exhaust gas turbo charging comprises an exhaust gas turbo charging device (57) having an exhaust gas turbine (58) and a compressor (59) or a shaft (62) with a turbine wheel (60) and a compressor wheel (61), respectively, and **in that** the exhaust gas turbo charging device (57) is mounted directly or indirectly on an upper face wall (39) of the assembly unit (15) consisting of cylinder head (14) and cylinder housing (13), wherein between exhaust gas entry side (63) of the exhaust gas turbine (58) and a first upper face wall section (64) of the cylinder head (14) is provided a first angular pipe section (65) and **in that** further the cylinder head (14) has a first upright exhaust gas channel (70) on an outlet region (69) via which the exhaust gas is channeled upwards (direction D) into the exhaust gas turbine (58) and charges the turbine wheel (60) there.

2. Outboard engine according to claim 1, **characterized in that** between exhaust gas exit side (66) of the exhaust gas turbine (58) and a second upper face wall section (67) of the cylinder housing (13) is provided a second angular pipe section (68).

3. Outboard engine according to claims 1 and 2, **characterized in that** at least one of the two pipe sections (65; 68) forms a dimensionally stable connection between assembly unit (15) and exhaust gas turbine (58).

4. Outboard engine according to claim 1, **characterized in that** the first exhaust gas channel (70) in the cylinder head (14) is provided with a cowling (71) extending essentially over the height (H) of said cylinder head (14), which cowling is formed as a cooling jacket (72) for the exhaust gas.

5. Outboard engine according to claim 4, **characterized in that** the cooling jacket (72) comprises an inner cooling channel (76) and an outer cooling channel (77), wherein the inner cooling channel (76) is flown through by engine oil and the outer cooling channel (76) is flown through by cooling water.

6. Outboard engine according to claim 5, **characterized in that** the inner cooling channel (76) is connected to the engine lubricant oil circuit and the outer cooling channel (77) is connected to the cooling water circuit of the outboard engine (3).

7. Outboard engine according to one or more of the preceding claims, **characterized in that** the exhaust gas exiting the exhaust gas turbine (58) is channeled downwards (direction E) into a second exhaust gas channel (78) in the cylinder housing (13).

8. Outboard engine according to one or more of the preceding claims, **characterized in that** the second pipe section (68) comprises a cooling jacket section (79) which is connected to the cooling water circuit of the outboard engine (3).

9. Outboard engine according to one or more of the preceding claims, **characterized in that** the exhaust gas turbine (58) is at least sectionally flown through by cooling water of the cooling water circuit of the outboard engine (1).

10. Outboard engine according to claim 1, **characterized in that** the compressor (59) is supplied with intake air from an upright air container (80) joined to the assembly unit (15).

11. Outboard engine according to claim 10, **characterized in that** the air container (80) is provided with an intake air muffler.

12. Outboard engine according to claim 1 and 10, **characterized in that** the medium exiting the compressor (59) gets into an intercooler (81) and from there is fed to a suction container (82) of a suction device connected upstream the cylinder head (14).

13. Outboard engine according to claim 12, **characterized in that** a first flexible connection piece (84) is provided between compressor (59) and intercooler (81) and a second flexible connecting piece (85) is provided between intercooler (81) and suction container (82).

14. Outboard engine according to claim 12, **characterized in that** the intercooler (81) is connected to the cooling water circuit of the outboard engine (1).

15. Reciprocating internal combustion engine according to one or more of the preceding claims 12 to 14, **characterized in that** above the upper face wall (39) of the assembly unit (15), fly wheels (37 and 38) of the crankshafts (18 and 19), the exhaust gas turbo charging device (57) and the intercooler (81) are arranged in a compact manner to one another.

## Revendications

1. Un moteur hors-bord (3) pour un navire, comprenant au moins un piston alternatif (9, 10) qui se déplace en va et vient dans un alésage de cylindre (11, 12) d'un corps de cylindre (13) formant une unité modulaire (15) avec une culasse (14), et sous intercalation de deux bielles (16,17) coopère avec le premier et le deuxième vilebrequin (18,19) dont ces vilebrequins (18,19) se tournent autour deux axes du vilebrequin (22,23) et qui sont en liaison avec deux roues dentées de synchronisation (24,25) d' un train d'engrenage (26), ce-que les vilebrequins se tournent de façon synchrone dans les directions opposées le moteur hors-bord (3) travaillant en turbocompression en cycle-diesel et dont ses vilebrequins (18,19) sont en position verticale de telle maniere, que une des deux vilebrequins (18 ou 19) s' agisse sur une hélice (34) du navire sous l'intervention d'une transmission (33), **caractérisé en ce que** cette turbocompression à gaz d'échappement ayant un dispositif de turbocompréssion à gaz d'échappement (57) avec une turbine à gaz d'échappement (58) et un condenseur (59), respectivement un arbre supportant (62) qui supporte une roue de turbine (60) et une roue de compresseur (61) et que le dispositif de turbocompréssion à gaz d'échappement (57) est fixé directement ou indirectement sur une section du paroi frontale supérieure (39) d'une unité modulaire (15) formée par la culasse (14) et le corps de cylindre (13),étant prévu une première partie de tube formée angulairement (65) entre le côté d'entrée des gaz d'échappement (63) de la turbine à gaz d'échappement (58)et qu'en outre, la culasse (14) a un premier canal d'échappement vertical (70)dans un domaine de sortie (69) par lequel les gaz d'échappement sont dirigés vers le haut (direction D) dans la turbine de gaz d'échappement (58) et de là font tourner la roue de la turbine (60).

2. Moteurs hors-bord selon la revendication 1, **caractérisé en ce que** entre le côté de sortie (66) de la turbine à gaz d'échappement (58) et uné deuxième section du paroi frontale supérieure du corps de cylindre (13) il est prévu une deuxième partie de tube formée angulairement (68).

3. Moteur hors-bord selon les revendications 1 et 2, **caractérisé en ce que** au moins une de deux parties de tube (65,68) forme une liaison indéformable entre l'unité modulaire (15) et la turbine à gaz d'échappement (58).

4. Moteurs hors-bord selon la revendication 1, **caractérisé en ce que** le premier canal d'échappement (70) dans la culasse a un revêtement (71) sur toute la hauteur (H) de ladite culasse (14), formé d'une chemise réfrigérante (72) pour les gaz d'échappement.

5. Moteur hors-bord selon la revendication 4, **caractérisé en ce que** la chemise réfrigérante (72) comporte un circuit de refroidissement interne (76) et un circuit de refroidissment externe (77), le circuit de refroidissement interne (76) est parcouru par l'huile du moteur et le circuit de refroidissement externe (77) par l'eau de refroidissement.

6. Moteur hors-bord selon la revendication 5, **caractérisé en ce que** le circuit de refroidissement interne (76) est connecté au circuit d'huile de lubrification du moteur, et le circuit de refroidissement externe (77) est connecté au circuit d'eau de refroidissement du moteur hors bord (3).

7. Un moteur hors-bord selon une ou plusieurs des revendications précédentes, **caractérisé en ce que** les gaz sortant de la turbine à gaz d'échappement (58) sont guidés vers le bas (direction E) dans un deuxième canal de gaz d'échappement (78) dans le corps de cylindre (13).

8. Un moteur hors-bord selon une ou plusieurs des revendications précédentes, **caractérisé en ce que** la deuxième partie du tube (68) a une partie de chemise réfrigérante (79), qui est raccordée au circuit de refroidissement du moteur hors bord (3).

9. Un moteur hors-bord selon une ou plusieurs des revendications précédentes, **caractérisé en ce que** la turbine à gaz d'échappement (58) est au moins parcourue en partie par l'eau de refroidissement du circuit de refroidissement du moteur hors bord (1).

10. Un moteur hors-bord selon la revendication 1, **caractérisé en ce que** le compresseur (59) est alimenté avec de l'air aspiré par un réservoir d'air en position verticale (80) lié à l'unité modulaire (15).

11. Un moteur hors-bord selon la revendication 10, **caractérisé en ce que** le réservoir d'air (80) est muni d'un silencieux pour l'aspiration d'air.

12. Un moteur hors-bord selon les revendications 1 et 10, **caractérisé en ce que** ce qui sort du compresseur (59) va dans un refroidisseur intermédiaire (81) et de là est guidé dans un réservoir d'aspiration (82) placé devant la culasse (14) d'un système d'aspiration.

13. Un moteur hors-bord selon la revendication 12, **caractérisé en ce qu'**un premier raccord flexible (84) est placé entre le compresseur (59) et le refroidisseur intermédiaire (81) et un second raccord flexible (85) entre le refroidisseur intermédiaire (81) et le réservoir d'aspiration (82).

14. Un moteur hors-bord selon la revendication 12, **caractérisé en ce que** le refroidisseur intermédiaire (81) est raccordé au circuit de refroidissement du moteur hors bord (1).

15. Un moteur à combustion interne à pistons alternatifs selon une ou plusieurs de revendications précedentes (12 à 14), **caractérisé en ce que** qu'au dessus de la paroi frontale supérieure (39) de l'unité modulaire (15) des volants (37 et 38) des vilebrequins (18 et 19), le dispositif de turbocompression à gaz d'échappement (57) et le refroidisseur intermédiaire (81) sont placés très près l'un de l'autre.
